# EUROPEAN PATENT SPECIFICATION

(11) **EP 0 605 245 B1**
(45) Date of publication and mention of the grant of the patent: **26.02.1997**
(21) Application number: 93310571.0
(22) Date of filing: 24.12.1993
(51) Int. Cl.: B65G 53/52

(54) **Powder conveying apparatus**
Vorrichtung zum Fördern von Pulver
Dispositif pour le transport de poudre

(30) Priority: 28.12.1992 JP 349117/92
(43) Date of publication of application: 06.07.1994
(73) Proprietor: SAKAI CHEMICAL INDUSTRY CO., LTD.,, Sakai-shi, Osaka 590 (JP)
(72) Inventor: Hirako, Mitsuru, Sakai Chemical Ind. Co.,Ltd., c/o, Iwaki-shi, Fukushima 970-04 (JP); Fukai, Kiyoshi, Sakai Chemical Ind. Co.,Ltd., c/o, Iwaki-shi, Fukushima 970-04 (JP); Abe, Kazunobu, Sakai Chemical Ind. Co.,Ltd., c/o, Iwaki-shi, Fukushima 970-04 (JP)
(74) Representative: W.P. Thompson & Co.

(56) References cited:
- DE-B- 1 012 562
- FR-A- 2 337 678
- US-A- 3 149 885

## Description

The present invention relates to a powder conveying apparatus for conveying various powders.

Hitherto, when conveying powder, for example, from a powder storage vessel to a grinder or a drier, reversely from the grinder or drier to the powder storage vessel, or from the drier to a bag filter, they are connected to each other by a duct, and the powder is conveyed by a gas stream such as an air stream.

As such a duct, a relatively rigid pipe made of hard plastic, metal or the like is used.

When conveying fine powder such as titanium oxide, however, there is a problem that the power is liable to collect on a wall surface of a duct, particularly in a bent part of the duct. This may not only interfere with the powder conveyance, but also affect quality of the powder unless such a collection of powder is removed when changing the type of powder to be conveyed.

Accordingly, in order to remove such a collection of powder in a duct, hammering, namely, to hammer the duct from the exterior, or vibrating the duct has been attempted, thus preventing the collection of powder.

But, such hammering or vibration was inadequate to remove the collection of powder.

In DE-A-1012562 bulk material is conveyed through a flexible pipe which is subjected to continuous vibration in order to prevent material from being deposited on the inner surface of the pipe. The vibration is preferably achieved by means of a piston or rotary piston compressor to produce a fluctuation of the air pressure within the pipe, resulting in vibration of the flexible pipe wall. In US-A-3149885, material is prevented from being deposited on the internal surface of a bend in a rigid pipe by injecting several jets of fluid into the pipe in the vicinity of the bend in order to guide the material through the bend without contacting the internal surface of the bend.

It is hence a main object of the invention to present a powder conveying apparatus capable of preventing powder from collecting on an inner wall of a duct, and being capable of surely removing such a collection of powder on the inner wall of the duct, if any.

The present inventors accumulated intensive studies in order to achieve the object and newly found that it is possible to prevent powder from collecting on an inner wall of a duct and to surely remove a collection of powder on the inner wall of the duct by using a flexible duct to convey powder by a gas stream, and injecting compressed gas (for example, compressed air) intermittently into the duct by a pulse gas injection device, thus completing the present invention.

More specifically, a powder conveying apparatus of the invention comprises a flexible duct for conveying powder by means of a conveyance gas stream, characterised by a gas pulse injection device for injecting compressed gas intermittently and momentarily into the duct to vibrate the duct, and a gas injection port of said injection device oriented the inside of the duct.

According to the invention, the duct is flexible and compressed gas is intermittently sent into the duct, so that the duct vibrates. This prevents a collection of powder and enables to surely remove the collection of powder on the inner wall of the duct from the duct, and to blown away by a transporting fluid.

The gas injection port may be located at the duct inlet or an arbitrary position in the duct, or may be disposed at proper intervals in the duct, but preferably at a position oriented to a bent part in the duct where powder is liable to collect.

Examples of the flexible duct in the invention may include a fabric duct and a soft plastic resin duct. As the fabric duct, it is preferable to use a duct made of woven cloth or nonwoven cloth, both of which may be coated with resin. Examples of soft plastic resin include tubular films made of soft vinyl chloride resin, polyethylene, polypropylene, polyester, natural rubber and synthetic rubber.

As the gas stream conveyance, air conveyance using air stream is well-known and is in the most general use, while the invention is further applicable to a gas stream conveyance using inert gas or flammable gas.

Thus, according to the powder conveying apparatus of the invention, since the duct is flexible and the pulse gas injection device is installed so that the gas injection port is oriented to the inside of the duct, the duct can be vibrated by injecting compressed gas intermittently into the duct. It is therefore possible to prevent powder from collecting on the inner wall of the duct, and the collection of powder on the inner wall of the duct can be surely removed from the duct and then be blown away by gas. Hence, the powder can be conveyed smoothly, and further, it is hardly necessary to clean the inside of the duct when changing the type of power to be conveyed. Moreover, since the present invention is carried out merely by sending pulse gas alone into the duct, the apparatus itself becomes simple and is easy to operate.

By way of example only, a specific embodiment of the present invention will now be described, with reference to the accompanying drawing, in which:

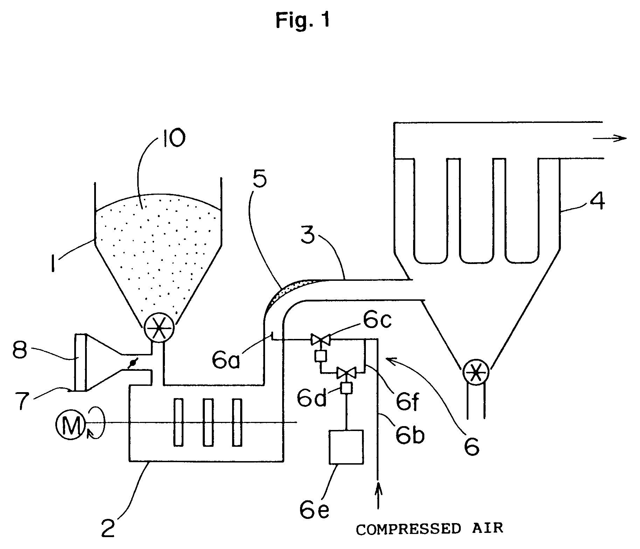

Fig. 1 is an explanatory diagram showing an example of the invention.

Referring now to the drawing, the powder conveying apparatus of the invention is described below.

Fig. 1 is an explanatory diagram showing an example of the powder conveying apparatus of the invention. As shown in Fig. 1, a grinder 2 is installed beneath a powder storage vessel 1, and an outlet of the grinder 2 is connected to a bag filter 4 through a duct 3.

Powder 10 falls from the powder storage vessel 1 into the grinder 2 to be ground, and is sent into the bag filter 4 through the duct 3 from a discharge port at the other end. Between the powder storage vessel 1 and the grinder 2, an air inlet 7 with an air filter 8 is installed. In the bag filter 4, air is aspirated from the upper side thereof (indicated by an arrow) by a suction blower, so that the powder 10 is collected.

The duct 3 is composed of a flexible material (nylon coated Tetoron cloth ( "Tetoron" is the trademark for polyester fiber) ), and is bent in an L-form in the midway. Therefore, in the conventional apparatus for conveying powder merely by an air flow from the grinder 2 to the bag filter 4, a powder collecting part 5 is liable to be formed in the bent part of the duct 3.

In the duct 3, on the other hand, an air injection port 6a of a pulse air injection device 6 is disposed oppositely to the L-bent part of the duct 3, and pulse air (compressed air) is injected from the injection port 6a toward the bent part.

The pulse air injection device 6 comprises an air feed tube 6b for sending compressed air into the air injection port 6a, a pulse air valve 6c provided in the air feed tube 6b, a solenoid valve 6d for opening and closing the pulse air valve 6c, and a timer 6e for opening and closing the solenoid valve, which is connected to the solenoid valve 6d.

The timer 6e controls the opening and closing timing and the opening duration of the solenoid valve 6d. The solenoid valve 6d is connected to a branch tube 6f from the air feed tube 6b, and the front end of the branch tube 6f is connected to the pulse air valve 6c. The pulse air valve 6c is a valve for discharging a large flow of air momentarily, which is designed to be opened by the compressed air momentarily sent from the branch tube 6f through the solenoid valve 6d, and be closed immediately.

In this example, the opening time of the pulse air valve 6c is momentary, namely, about 0.1 second, whereas the opening time of the pulse air valve 6c can be determined arbitrarily within a range of 0.01 to 1.0 second. It is preferable that the pressure of the injected pulse air is set as high as possible, but normally around 7 kg/cm², being the value of one-stage compression in an air compressor.

The aperture of the pulse air valve 6c may be selected properly depending on the purpose. For example, the aperture may be about 25 mm for a duct of inside diameter about 600 mm. Pulse air from the air injection port 6a is normally injected at intervals of about 60 seconds, however, other intervals may be applicable within a range from 10 minutes to 10 seconds.

Injection of pulse air by the pulse air injection device 6 may be performed intermittently during the conveyance of the powder 10, or the pulse air injection device 6 may be operated at specific intervals. Moreover, after conveying the powder 10, the pulse air injection device 6 may be operated for the purpose of cleaning the inside of the duct 3.

Thus, according to the powder conveying apparatus of this example, the duct 3 is vibrated by injecting pulse air into the duct 3 by the pulse air injection device 6, thereby preventing powder from collecting on the inner wall of the duct 3, and removing the powder 10 collected on the inner wall of the duct 3 from the inner wall, to blow away to the outlet of the duct 3.

It is preferable that the air injection port 6a is disposed before such a position where powder is particularly liable to collect. If the duct 3 is long and straight, a collection of powder in the duct 3 may be greatly decreased by disposing a plurality of the air injection ports 6a in proper positions.

Although the duct 3 is installed between the grinder 2 and the bag filter 4 in the example mentioned above, the powder conveying apparatus of the invention is not limited to such a case alone, but it may be installed, for example, between the drier and the grinder, or between the powder storage vessel and the powder treating device (a drier, a grinder, etc.).

The applicable powder ranges from fine powder to granules, and includes those in dry state and wet state.

The gas used as pulse gas in the invention is not limited to air, but any type of gas can be used.

## Claims

1. A powder conveying apparatus comprising a flexible duct (3) for conveying powder by means of a conveyance gas stream, characterised by a gas pulse injection device (6) for injecting compressed gas intermittently and momentarily into the duct (3) to vibrate the duct, and a gas injection port (6a) of said injection device (6) oriented to the inside of the duct (3).

2. The powder conveying apparatus of claim 1, wherein the gas injection port (6a) is oriented to a bent part in the duct (3).

3. The powder conveying apparatus of claim 1 or claim 2, wherein the pulse gas injection device (6) comprises an air feed tube (6b) for sending compressed air into the air injection port (6a), a pulse air valve (6c) attached to the air feed tube (6b) for discharging a large flow of air momentarily, a solenoid valve (6d) for opening and closing the pulse air valve (6c), and a timer (6e) connected to the solenoid valve (6d) for opening and closing the solenoid valve.

4. The powder conveying apparatus of claim 1, 2 or 3, wherein the duct (3) is made of fabric or soft plastic resin.

## Patentansprüche

1. Vorrichtung zum Fördern von Pulver umfassend einen flexiblen Kanal (3) zum Fördern von Pulver mittels eines Beförderungsgasstroms, gekennzeichnet durch eine Gaspulseinspritzvorrichtung (6) zum aussetzenden und momentanen Einspritzen von Druckgas in den Kanal (3), um den Kanal zu vibrieren, und eine auf die Innenseite des Kanals (3) ausgerichtete Gaseinspritzöffnung (6a) der genannten Einspritzvorrichtung (6).

2. Vorrichtung zum Fördern von Pulver nach Anspruch 1, wobei die Gaseinspritzöffnung (6a) auf einen gebogenen Teil im Kanal (3) ausgerichtet ist.

3. Vorrichtung zum Fördern von Pulver nach Anspruch 1 oder 2, wobei die Pulsgaseinspritzvorrichtung (6) ein Luftzuführrohr (6b) zum Senden von Druckluft in die Lufteinspritzöffnung (6a), ein am Luftzuführrohr (6b) angebrachtes Pulsluftventil (6c) zum momentanen Ablassen eines großen Luftstroms, ein Magnetventil (6d) zum Öffnen und Schließen des Pulsluftventils (6c) und einen an das Magnetventil (6d) angeschlossenen Zeitgeber (6e) zum Öffnen und Schließen des Magentventils umfaßt.

4. Vorrichtung zum Fördern von Pulver nach Anspruch 1, 2 oder 3, wobei der Kanal (3) aus einem Gewebe oder einem weichen Kunstharz ist.

## Revendications

1. Dispositif pour le transport de poudre comprenant un conduit souple (3) pour transporter la poudre au moyen d'un flux de gaz de transport, caractérisé par un dispositif d'injection par pulsation de gaz (6) pour injecter du gaz comprimé par intermittence et momentanément dans le conduit (3) pour faire vibrer le conduit, et un port d'injection de gaz (6a) dudit dispositif d'injection (6) orienté vers l'intérieur du conduit (3).

2. Dispositif pour le transport de poudre de la revendication 1, dans lequel le port d'injection de gaz (6a) est orienté vers une partie courbe dans le conduit (3).

3. Dispositif pour le transport de poudre de la revendication 1 ou la revendication 2, dans lequel le dispositif d'injection par pulsation de gaz (6) comprend un tube d'arrivée d'air (6b) pour envoyer de l'air comprimé dans le port d'injection d'air (6a), une soupape d'air pulsé (6c) fixée au tube d'arrivée d'air (6b) pour décharger un grand courant d'air momentanément, une électrovanne (6d) pour ouvrir et fermer la soupape d'air pulsé (6c), et une minuterie (6e) connectée à l'électrovanne (6d) pour ouvrir et fermer l'électrovanne.

4. Dispositif pour le transport de poudre de la revendication 1, 2 ou 3, dans lequel le conduit (3) est réalisé en tissu ou en une résine plastique tendre.
